# FASCICULE DE BREVET EUROPEEN

(11) **EP 1 620 664 B1**
(45) Date de publication et mention de la délivrance du brevet: **16.08.2006**
(21) Numéro de dépôt: 04719504.5
(22) Date de dépôt: 11.03.2004
(51) Int. Cl.: F16H 19/02

(54) **TRANSMISSION A VIS, ECROU ET CABLE**
GETRIEBE MIT SCHRAUBE, MUTTER UND SEIL
SCREW, NUT AND CABLE TRANSMISSION

(30) Priorité: 14.03.2003 FR 0350046
(43) Date de publication de la demande: 01.02.2006
(73) Titulaire: COMMISSARIAT A L'ENERGIE ATOMIQUE, 75752 Paris Cédex 15 (FR)
(72) Inventeur: GARREC, Philippe, F-91190 GIF SUR YVETTE (FR)
(74) Mandataire: Poulin, Gérard
(86) Numéro de dépôt international: PCT/FR2004/050101
(87) Numéro de publication internationale: WO 2004/083683

(56) Documents cités:
- DE-U- 20 201 440
- FR-A- 2 640 607
- FR-A- 2 724 208
- FR-A- 2 809 464

## Description

Le sujet de cette invention est une transmission à vis, écrou et câble perfectionnant, par exemple, celle du brevet français 2 809 464, qui comprend toutes les caractéristiques du préambule de la revendication indépendante 1.

De telles transmissions entre un moteur et un organe entraîné comprennent un écrou tourné par le moteur, une vis engagée dans l'écrou par filetage, mais arrêtée en rotation par une glissière ou un moyen analogue, et un câble attaché à la vis. La rotation du moteur entraîne celle de l'écrou, la translation de la vis et le tirage du câble, qui entraîne l'organe. Ces transmissions présentent certains avantages, dont la légèreté, l'adaptation facile à de nombreuses dimensions, et la conversion d'une rotation en une translation de façon réversible ou non. Ces différents avantages les rendent intéressantes pour commander des mouvements télescopiques d'organes cylindriques en robotique ou dans des domaines analogues. Un autre avantage, souligné dans le brevet précédent, est la démultiplication du mouvement qui permet d'appliquer une force importante à l'organe entraîné, concomitamment à une petite vitesse, généralement acceptable pour ces applications.

Un problème auquel on est souvent confronté reste la longueur de la vis, dont dépend la course offerte à l'organe entraîné. La vis doit en général rester logée dans un volume peu étendu, comme l'intérieur d'un segment de robot, dont elle touche très vite les limites si elle est conçue en étant trop longue. Et même quand une vis de grande longueur est cinématiquement admissible, elle continue de présenter les inconvénients d'un porte-à-faux correspondant entre l'écrou qui la soutient et le point d'attache du câble. Elle devient sujette à de grands efforts de flexion, qui ont toujours été un grave inconvénient de ces transmissions.

La modification de la transmission antérieure qu'offre l'invention est fondée sur l'idée de renoncer à une partie de la démultiplication et de ses avantages au profit d'une réduction de la longueur de la vis par rapport à la longueur de la course. Précisément, un multiplicateur de mouvement est disposé sur le câble, entre la vis et l'organe entraîné, et divise le câble.

Un aspect de l'invention est ainsi une transmission comprenant un écrou tourné par un moteur, une vis engagée dans l'écrou, un moyen d'arrêt en rotation de la vis et un câble attaché à la vis et auquel un organe entraîné est attaché, caractérisée en ce qu'elle comprend une poulie double ayant un axe de rotation fixe par rapport au moteur, composée d'une poulie élémentaire de grand diamètre et d'une poulie élémentaire de petit diamètre, et en ce que le câble est composé de deux brins successifs, dont l'un est tendu entre la poulie élémentaire de petit diamètre et la vis et l'autre est tendu entre la poulie élémentaire de grand diamètre et l'organe entraîné.

Dans un deuxième aspect, l'invention concerne une telle transmission, caractérisée en ce qu'elle comprend une seconde poulie double, composée d'une poulie élémentaire de grand diamètre et d'une poulie élémentaire de petit diamètre, la vis étant placée entre les poulies doubles, et un second câble, composé de deux brins successifs dont l'un est tendu entre la poulie élémentaire de petit diamètre et la vis et l'autre est tendu entre la poulie élémentaire de grand diamètre et l'organe entraîné.

Il est alors possible que les brins tendus entre les poulies élémentaires de grand diamètre et l'organe entraîné soient des portions successives d'un câble unique passant à côté de la vis. Cette réalisation est simple, d'autant plus qu'on peut lui associer un unique organe tendeur pour l'ensemble de la câblerie, qui peut être un variateur de position d'axe de la seconde poulie double par rapport au moteur.

Un perfectionnement au mode de réalisation précédent consiste en une poulie de renvoi sur laquelle le brin tendu entre la poulie élémentaire de grand diamètre et l'organe entraîné défile en formant un demi-tour, la poulie de renvoi étant plus proche de l'écrou que la poulie double.

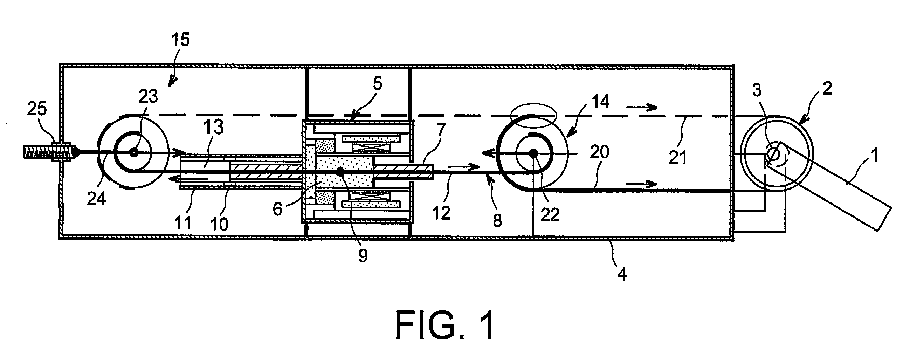

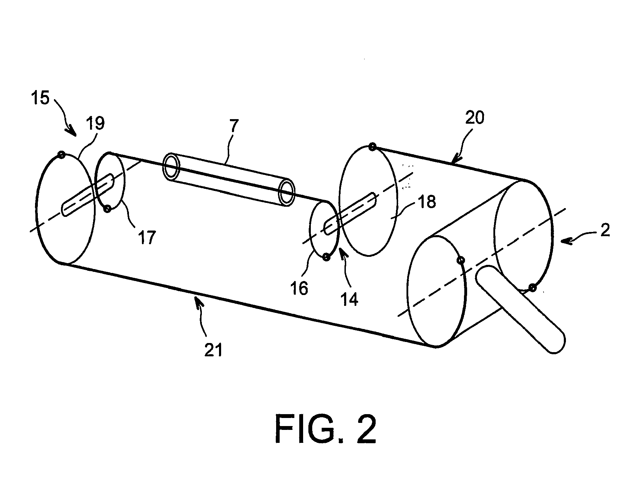

L'invention sera désormais décrite en liaison aux figures 1 à 4, dont les figures 1, 3 et 4 illustrent trois réalisations différentes de l'invention et la figure 2 est un schéma aidant à comprendre la figure 1.

On se préoccupe, pour les figures 1 et 2, de commander la rotation d'un organe 1 en forme de levier, tel qu'un segment de robot, autour d'une poulie 2 dont l'axe 3 est soutenu par un boîtier 4 abritant la transmission de l'invention. Le boîtier 4 comprend un moteur électrique 5 dont le stator est fixé au boîtier 4, et l'intérieur est creux et contient un écrou 6 qu'il entraîne et dans lequel est engagée une vis 7 s'allongeant à travers le moteur 5 vers la poulie 2. Un câble 8 est attaché à la vis 7, de préférence dans une position à mi-longueur, incluse dans l'écrou 6 ou à peu de distance de lui, afin de réduire les moments de flexion de la vis 7. Le point d'attache porte la référence 9. Une extrémité de la vis 7 porte des roulettes 10 mobiles sur une glissière 11 parallèle à la vis, afin d'empêcher la vis de tourner. La rotation de l'écrou 6 est donc transmise en une translation de la vis 7 et du câble 8. Le câble 8 comprend deux brins 12 et 13 de part et d'autre du point d'attache 9 et qui mènent à deux poulies doubles 14 et 15 entre lesquelles le moteur 5 est situé. Chacune des poulies doubles 14 et 15 comprend une poulie de petit diamètre 16 et 17, à laquelle l'extrémité du brin 12 ou 13 opposée au point d'attache 9 est fixée, et une poulie de grand diamètre 18 ou 19 sur laquelle sont fixés d'autres brins de câble 20 et 21 menant tous deux à la poulie 2. La câblerie forme donc une boucle à peu près continue, sauf aux poulies doubles 14 et 15. Comme les différentes poulies sont décalées latéralement, le brin 21, par exemple, passe à l'écart du moteur 5 et de l'autre poulie 18 de grand diamètre. L'axe 22 de la poulie double 14 est fixe par rapport au boîtier 4, mais l'axe 23 de la poulie double 15 peut être déplacé par rapport au moteur 5, si par exemple il est au bout d'un tirant 24 dont la position peut être réglée, en faisant tourner une douille filetée 25 dans laquelle il est engagé et qui est fixée au boîtier 4 tout en pouvant tourner. L'ensemble forme un élément tendeur unique, suffisant pour modifier à lui seul la tension dans toute la câblerie et lui donner la tension souhaitée.

D'après le rapport de diamètre des poulies 16, 17 et 18, 19, il est manifeste qu'un déplacement de translation de la vis 7 provoque un déplacement plus grand, dans le même rapport, des brins de câble 20 et 21 et donc une rotation plus grande du bras 1 qu'en l'absence des poulies 14 et 15.

Le double système à câble et poulie double 14 et 15 est utile pour commander un mouvement dans les deux sens. Si un mouvement dans un seul sens est suffisant (si par exemple la gravité ou un ressort effectue toujours un rappel), un seul système à poulie double est suffisant.

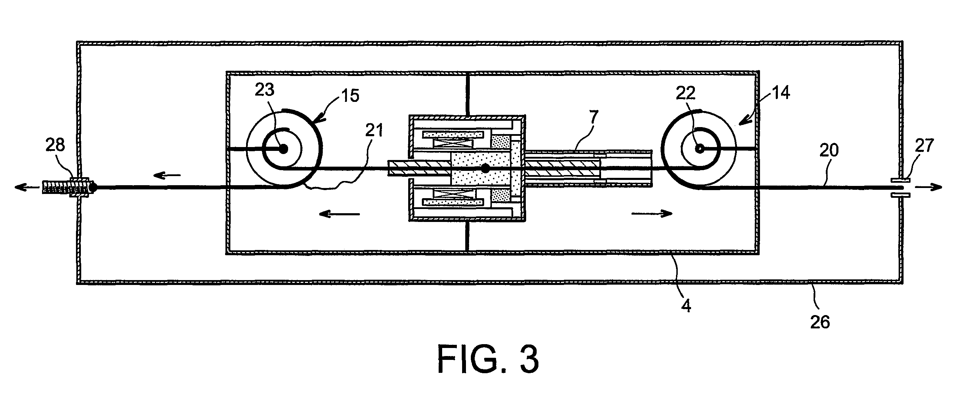

On passe à la figure 3. La réalisation qu'elle illustre est destinée à commander une translation, mais comporte de nombreux éléments communs à la précédente et qui porteront alors les mêmes références. L'organe 1 tournant est remplacé par un boîtier 26 coulissant autour du boîtier 4 déjà rencontré et le contenant complètement. Les axes 22 et 23 des poulies doubles 14 et 15 sont ici fixés tous deux au boîtier 4 à des positions invariables, et les brins 20 et 21 attachés aux poulies de grand diamètre 18 et 19 sont fixés directement à des points d'attache 27 et 28 opposés sur le boîtier extérieur 26. Le reste du système est inchangé. La translation de la vis 7 produit directement une translation du boîtier extérieur 26 avec un rapport de mouvement égal à celui des poulies de grand diamètre 18 et 19 aux poulies de petit diamètre 16 et 17. La tension de la câblerie peut être réglée en modifiant la tension au point d'attache 27 et 28.

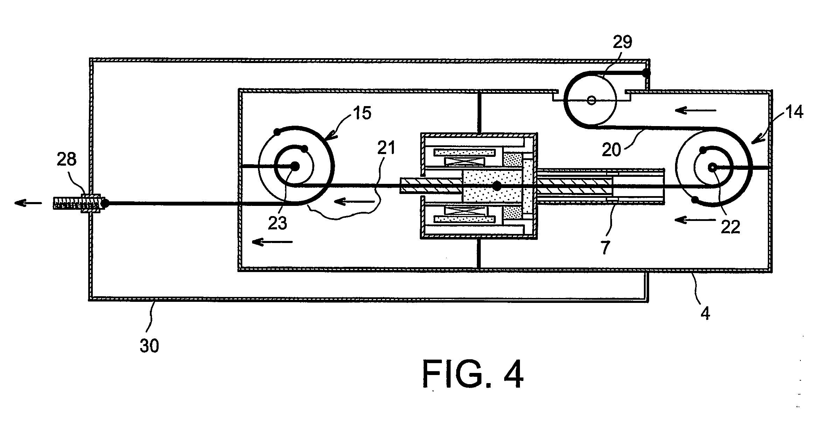

Le système de la figure 3 est satisfaisant d'un point de vue cinématique, mais présente l'inconvénient que le boîtier extérieur englobe l'autre boîtier et est donc encombrant. On peut y remédier avec le perfectionnement de la figure 4, dans lequel une poulie de renvoi 29 est ajoutée au boîtier 4 et s'étend, par exemple, non loin du moteur 5, en tout cas entre les poulies doubles 14 et 15. Le brin 20 passe alors par la poulie de renvoi 29 et fait un demi-tour sur elle pour reprendre la direction qu'il avait à la figure 3, et son extrémité est accrochée au boîtier extérieur, portant ici la référence 30 puisqu'il est plus court. Un mouvement télescopique des boîtiers 4 et 30 devient alors possible, le boîtier 4 pouvant rentrer entièrement dans le boîtier 30 extérieur ou en sortir. Le reste de la réalisation précédente est inchangé.

## Revendications

1. Transmission comprenant un écrou (6) tourné par un moteur (5) , une vis (7) engagée dans l'écrou, un moyen d'arrêt en rotation (10, 11) de la vis et un câble (8) attaché à la vis (7) et auquel un organe entraîné (1, 26) est attaché, **caractérisée en ce qu'**elle comprend une poulie double (14) ayant un axe de rotation fixe par rapport au moteur, composée d'une poulie élémentaire de grand diamètre (18) et d'une poulie élémentaire de petit diamètre (16), et **en ce que** le câble est composé de deux brins successifs, dont l'un (12) est tendu entre la poulie élémentaire de petit diamètre et la vis et l'autre (20) est tendu entre la poulie élémentaire de grand diamètre et l'organe entraîné.

2. Transmission selon la revendication 1, **caractérisée en ce qu'**elle comprend une seconde poulie double (15), composée d'une poulie élémentaire de grand diamètre et d'une poulie élémentaire de petit diamètre, la vis étant placée entre les poulies doubles, et un second câble, composé de deux brins successifs dont l'un est tendu entre la poulie élémentaire de petit diamètre et la vis et l'autre est tendu entre la poulie élémentaire de grand diamètre et l'organe entraîné.

3. Transmission selon la revendication 2, **caractérisée en ce que** les brins (20, 21) tendus entre les poulies élémentaires de grand diamètre et l'organe entraîné sont des portions successives d'un câble unique passant à côté de la vis.

4. Transmission selon la revendication 3, **caractérisée en ce qu'**elle comprend un unique organe tendeur (25).

5. Transmission selon la revendication 4, **caractérisée en ce que** l'organe tendeur est un variateur de position d'axe de la seconde poulie double par rapport au moteur.

6. Transmission selon l'une quelconque des revendications 1 à 5, **caractérisée en ce qu'**elle comprend une poulie de renvoi (29) sur laquelle le brin tendu entre la poulie élémentaire de grand diamètre et l'organe défile en formant un demi-tour, la poulie de renvoi étant plus proche de l'écrou que la poulie double.

## Claims

1. Transmission which includes a nut (6) turned by a motor (5), a screw (7) engaged in the nut, a means (10, 11) of stopping the rotation of the nut and a cable (8) attached to the screw (7) and to which a device being driven (1, 26) is attached, **characterised by** the fact that it is made up of a double pulley (14) with an axis of rotation that is fixed in relation to the motor, made up of an elementary pulley of large diameter (18) and an elementary pulley of small diameter (16), so that the cable is made up of two successive cable lines, one of which (12) is stretched between the elementary pulley of small diameter and the screw, and the other (20) stretched between the elementary pulley of large diameter and the device being driven.

2. Transmission as in claim 1, **characterised by** the fact that it includes a second double pulley (15), made of an elementary pulley of large dimension and an elementary pulley of small dimension, with the screw located between the double pulleys, and a second cable, made up of two successive cable lines, one of which is stretched between the elementary pulley of small diameter and the screw, and with the other stretched between the elementary pulley of large diameter and the device being driven.

3. Transmission as in claim 2, **characterised by** the fact that the cable lines (20, 21) stretched between the elementary pulleys of large diameter and the device being driven are the successive portions of a single cable passing to one side of the screw.

4. Transmission as in claim 3, **characterized by** the fact that it includes a single tensioning device (25).

5. Transmission as in claim 4, **characterized by** the fact that the tensioning device is a position adjuster for the axis of the second double pulley in relation to the motor.

6. Transmission as in any one of the claims 1 to 5, **characterized by** the fact that it involves the use of a guide pulley (29) on which the line stretched between the elementary pulley of large diameter and the device is run whilst making a half turn, with the guide pulley being closer to the nut than the double pulley.

## Patentansprüche

1. Getriebe mit einer durch einen Motor (5) angetriebenen Schraubenmutter (6), einer in der Schraubenmutter befindlichen Schraube (7), einer Drehblockiereinrichtung (10, 11) der Schraube und einem an der Schraube (7) befestigten Kabel (8), an dem ein angetriebenes Organ (1, 26) festgemacht ist,
**dadurch gekennzeichnet, dass** es eine Doppelrolle (14) umfasst, mit einer in Bezug auf den Motor stationären Achse und gebildet durch eine Elementarrolle mit großem Durchmesser (18) und eine Elementarrolle mit kleinem Durchmesser (16), und **dadurch**, dass das Kabel durch zwei sukzessive Kabelstränge gebildet wird, von denen der eine (12) zwischen der Elementarrolle kleinen Durchmessers und der Schraube gespannt ist, und der andere zwischen der Elementarrolle großen Durchmessers und dem angetriebenen Organ gespannt ist.

2. Getriebe nach Anspruch 1, **dadurch gekennzeichnet, dass** es eine zweite Doppelrolle (15) umfasst, gebildet durch eine Elementarrolle mit großem Durchmesser und eine Elementarrolle mit kleinem Durchmesser, wobei die Schraube sich zwischen den Doppelrollen befindet, sowie ein zweites Kabel, gebildet durch zwei sukzessive Kabelstränge, von denen der eine (12) zwischen der Elementarrolle kleinen Durchmessers und der Schraube gespannt ist, und der andere zwischen der Elementarrolle großen Durchmessers und dem angetriebenen Organ gespannt ist.

3. Getriebe nach Anspruch 2, **dadurch gekennzeichnet, dass** die zwischen den Elementarrollen großen Durchmessers und dem angetriebenen Organ gespannten Stränge (20, 21) sukzessive Teilstücke eines einzigen, seitlich an der Schraube vorbeigeführten Kabels sind.

4. Getriebe nach Anspruch 3, **dadurch gekennzeichnet, dass** es eine einzige Spannvorrichtung (25) umfasst.

5. Getriebe nach Anspruch 4, **dadurch gekennzeichnet, dass** die Spannvorrichtung eine Einrichtung zur Veränderung der Position der Achse der zweiten Doppelrolle in Bezug auf den Motor ist.

6. Getriebe nach einem der Ansprüche 1 bis 5, **dadurch gekennzeichnet, dass** es eine Umlenkrolle (29) umfasst, über die auf einem Halbumfang der zwischen der Elementarrolle großen Durchmessers und dem Organ gespannte Strang läuft, wobei die Umlenkrolle sich näher bei der Schraubenmutter befindet als die Doppelrolle.
